# EUROPEAN PATENT APPLICATION

(11) **EP 1 229 302 A2**
(43) Date of publication of application: **07.08.2002**
(21) Application number: 02075160.8
(22) Date of filing: 16.01.2002
(51) Int. Cl.: G01B 7/30

(54) **Target wheel sensor assembly**

(30) Priority: 06.02.2001 US 777809
(71) Applicant: Delphi Technologies, Inc., Troy, MI 48007 (US)
(72) Inventor: Lequesne, Bruno Patrice Bernard, Troy, MI 48084 (US); Schroeder, Thaddeus, Rochester, MI 48309 (US); Omekanda, Avoki M., Rochester, MI 48306 (US)
(74) Representative: Denton, Michael John

(57) **Abstract**

A target wheel sensor assembly (10, 40, 70, 100, 130, 160, 190, 220, 250, 280, 310) includes a target wheel (12, 42, 72, 102, 132, 162, 192, 222, 252, 282, 312), a magnet (18, 48, 78, 108, 138, 168, 198, 228, 258, 288, 318), a magnetic piece (22, 52, 82, 112, 142, 172, 202, 232, 262, 292, 322), and a coil (20, 50, 80, 110, 140, 170, 200, 230, 260, 290, 320) to sense changes in the magnetic field caused by the rotation of the target wheel. The magnet (18, 48, 78, 108, 138, 168, 198, 228, 258, 288, 318), the magnetic piece (22, 52, 82, 112, 142, 172, 202, 232, 262, 292, 322) and the coil (20, 50, 80, 110, 140, 170, 200, 230, 260, 290, 320) are configured so that as the target wheel (12, 42, 72, 102, 132, 162, 192, 222, 252, 282, 312) rotates, the coil (20, 50, 80, 110, 140, 170, 200, 230, 260, 290, 320) outputs an asymmetric signal. This asymmetric signal is used to determine the position and direction of motion of the target wheel (12, 42, 72, 102, 132, 162, 192, 222, 252, 282, 312) as it rotates.

## Description

### TECHNICAL FIELD

The present invention relates to motor vehicle sensors and actuators.

### BACKGROUND OF THE INVENTION

Modern motor vehicles are equipped with numerous sensors which provide detailed information regarding the operation of the vehicle. This information may be displayed for a driver or it may be processed and provided to various vehicle control systems. A target wheel sensor, for example, may be used to determine the angular speed or angular position of a rotating part in the vehicle, e.g., a crankshaft and a driveshaft. In either case, a target wheel may be engaged with the rotating part for inducing signals in one or more sensors positioned next to the target wheel, with the signals representing the angular position or angular speed of the rotating part. These signals can be used in various control systems, e.g., an ignition system and a speed control system.

The present invention recognizes that certain applications require the detection of not only the position of the target wheel, but the detection of the direction of motion of the target wheel as well. Devices have been provided that can be used to detect the position of the target wheel and the direction of motion. These devices typically require a first sensor and a second sensor placed at a predetermined angular distance from each other around a target wheel. Unfortunately, the need for a second sensor, and thus, a second coil, increases the cost of the device.

The present invention has recognized these prior art drawbacks, and has provided the below-disclosed solutions to one or more of the prior art deficiencies.

### SUMMARY OF THE INVENTION

A target wheel sensor assembly includes a target wheel, a magnetic piece, a magnet, and a coil. The magnetic piece and/or the magnet and/or the coil is configured so that as the target wheel rotates it causes the coil to output an asymmetric signal.

In one aspect of the present invention, the sensor assembly defines a central axis. The magnet and the coil are oriented perpendicularly to the central axis. In this aspect, the magnetic piece is configured so that as the target wheel rotates it causes the coil to output an asymmetric signal.

In another aspect of the present invention, the sensor assembly defines a central axis. The magnet is placed proximal to the target wheel and the coil circumscribes the magnetic piece. Moreover, the coil and the magnetic piece are placed between the magnet and the target wheel. In this aspect, the magnet, the coil, and the magnetic piece are oriented at an angle with the central axis.

In yet another aspect of the present invention, the sensor assembly defines a central axis and the magnet is placed proximal to the target wheel. The coil circumscribes the magnetic piece, and the coil and magnetic piece are placed between the magnet and the target wheel. In this aspect, the magnetic piece is tapered.

In still another aspect of the present invention, the magnet is placed proximal to the target wheel. The coil circumscribes the magnetic piece, and the coil and magnetic piece are placed between the magnet and the target wheel. In this aspect, the coil is asymmetrically shaped.

In yet still another aspect of the present invention, the sensor assembly defines a central axis. The magnet is placed proximal to target wheel. Moreover, the coil circumscribes the magnetic piece. The coil and the magnetic piece are placed between the magnet and the target wheel. In this aspect, the magnet is oriented perpendicular to the central axis, and the coil and the magnetic piece are oriented at an angle with the central axis.

In another aspect of the present invention, the sensor assembly defines a central axis. The magnet is placed proximal to the target wheel. Moreover, the coil circumscribes the magnetic piece, and the coil and magnetic piece are placed between the magnet and the target wheel. In this aspect, the magnet, the coil, and the magnetic piece are oriented perpendicular to the central axis. The magnet generates a magnetic field that is oriented at an angle with the central axis.

In still another aspect of the present invention, the sensor assembly defines a central axis and the magnet is placed proximal to the target wheel. The coil circumscribes the magnetic piece, and the coil and the magnetic piece are placed between the magnet and the target wheel. In this aspect, the magnet generates at least a first magnetic field and at least a second magnetic field.

In yet another aspect of the present invention, the sensor assembly defines a central axis, and the magnet is placed proximal to the target wheel. The coil circumscribes the magnetic piece, and the coil and the magnetic piece are placed between the magnet and the target wheel. In this aspect, the magnet, the coil, and the magnetic piece are oriented perpendicular to the central axis. Moreover, the magnet is at least partially tapered.

In yet still another aspect of the present invention, the sensor assembly defines a central axis, and the magnet is placed proximal to the target wheel. The coil circumscribes the magnetic piece, and the coil and the magnetic piece are placed between the magnet and the target wheel. In this aspect, the magnet, the coil, and the magnetic piece are oriented perpendicular to the central axis. Moreover, the magnet defines a center that is located a distance from the central axis.

In another aspect of the present invention, a target wheel sensor assembly includes a target wheel, a magnetic piece, one magnet, and one coil placed in proximity to the target wheel. In this aspect, as the target wheel rotates, the coil senses a position of the target wheel and a direction of motion of the target wheel.

In still another aspect of the present invention, a target wheel sensor assembly includes a target wheel, one magnet, and one coil placed in proximity to the target wheel. In this aspect, as the target wheel rotates, the coil senses a position of the target wheel and a direction of motion of the target wheel.

The present invention will now be described, by way of example, with reference to the accompanying drawings, in which:

### BRIEF DESCRIPTION OF THE DRAWINGS

Figure 1 is a plan view of a target wheel sensor assembly;
Figure 2 is a plan view of a first alternate sensor assembly;
Figure 3 is a plan view of a second alternate sensor assembly;
Figure 4 is a plan view of a third alternative sensor assembly;
Figure 5 is a plan view of a fourth alternative sensor assembly;
Figure 6 is a plan view of a fifth alternative sensor assembly;
Figure 7 is a plan view of a sixth alternative sensor assembly;
Figure 8 is a plan view of a seventh alternative sensor assembly;
Figure 9 is a plan view of a eighth alternative sensor assembly;
Figure 10 is a plan view of a ninth alternative sensor assembly;
Figure 11 is a plan view of a tenth alternative sensor assembly;
Figure 12 is a graph of the magnetic flux density present in the coil versus the target wheel position; and
Figure 13 is a block diagram of a system in which the present invention can be incorporated.

### DESCRIPTION OF AN EMBODIMENT OF THE INVENTION

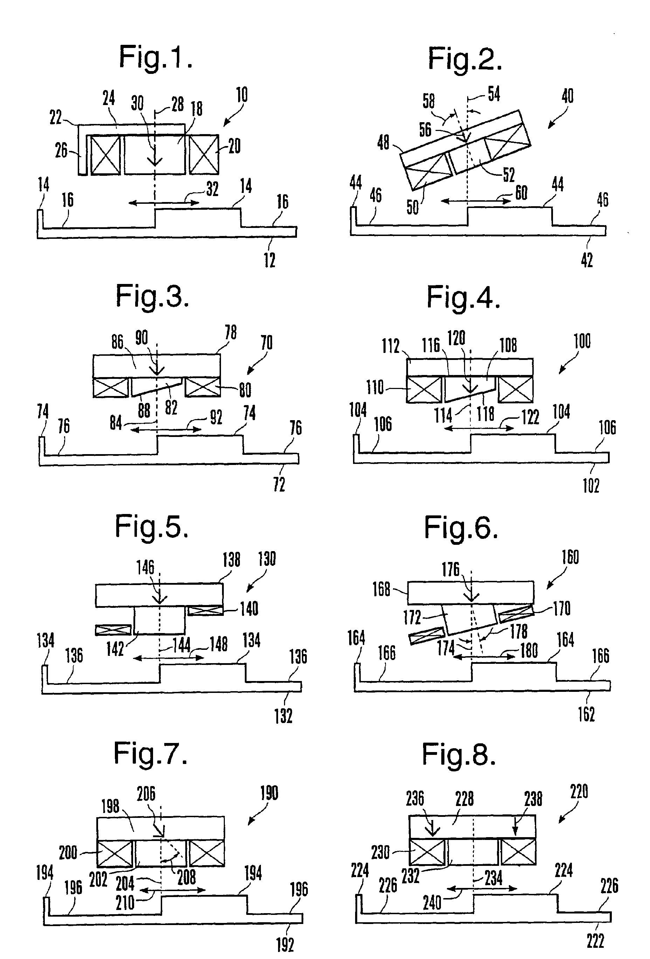

Referring initially to Figure 1, a target wheel sensor assembly is shown and generally designated 10. Figure 1 shows that the sensor assembly 10 includes a preferably magnetic target wheel 12 that is alternatingly formed with plural teeth 14 and plural slots 16. A preferably permanent magnet 18 is placed just beyond the outer periphery of the target wheel 12. A generally toroidal coil 20 of wire circumscribes the magnet 18. Figure 1 shows that the sensor assembly 10 also includes a magnetic piece 22 that includes an upper portion 24 and a lateral portion 26 extending therefrom. Preferably, the magnetic piece 22 is made from steel. The magnetic piece 22 is placed so that the upper portion 24 is adjacent to the top of the magnet 18 and the lateral portion 26 flanks one side of the coil 20.

As shown in Figure 1, the sensor assembly 10 defines a central axis 28 with which the center of the magnet 18, the center of the coil 20, and the center of the target wheel 12 are aligned. Moreover, the magnet 18 and the coil 20 are oriented so that they are perpendicular with the central axis 28. Figure 1 shows that the magnet 18 generates a magnetic field as indicated by arrow 30. As shown, the magnet 18 is magnetized such that the magnetic field 30 is parallel to the central axis 28.

As the target wheel 12 rotates, the teeth 14 move past the coil 20, as indicated by direction arrow 32, and alter the magnetic field 30 sensed by the coil 20. Accordingly, the configuration of the sensor assembly 10, i.e., the magnetic piece 22 placed adjacent to the coil 20 and the magnet 18, causes the coil 20 to output an asymmetric signal, described below. More specifically, the magnetic piece 22 alters the return path of the magnetic field 30 which causes the coil 20 to output the asymmetric signal.

Figure 2 shows an alternative sensor assembly generally designated 40. As shown in Figure 2, the sensor assembly 40 includes a magnetic target wheel 42 that is alternatingly formed with plural teeth 44 and plural slots 46. A permanent magnet 48 is placed just beyond the outer periphery of the target wheel 42. A coil 50 of wire circumscribes a magnetic piece 52. The coil 50 and the magnetic piece 52 are placed between the magnet 48 and the target wheel 42.

As shown in Figure 2, the sensor assembly 40 defines a central axis 54 with which the center of the magnet 48 is aligned. Moreover, the coil 50 and the magnetic piece 52 are oriented parallel to the length of the magnet 48. Figure 2 shows that the magnet 48 generates a magnetic field, indicated by arrow 56, that is perpendicular to the length of the magnet 48. As shown, the magnet 48, the coil 50, and the magnetic piece 52 are oriented at an angle 58 with the central axis 54.

As the target wheel 42 rotates, the teeth 44 move past the coil 50, as indicated by direction arrow 60, and alter the magnetic field 56 sensed by the coil 50. Accordingly, the configuration of the sensor assembly 40, i.e., the orientation of the magnet 48, the coil 50, and the magnetic piece 52, causes the coil 50 to output an asymmetric signal, described below.

Referring now to Figure 3, a second alternative sensor assembly is shown and generally designated 70. Figure 3 shows that the sensor assembly 70 includes a magnetic target wheel 72 that is alternatingly formed with plural teeth 74 and plural slots 76. A permanent magnet 78 is placed just beyond the outer periphery of the target wheel 72. A coil 80 of wire circumscribes a magnetic piece 82. The coil 80 and the magnetic piece 82 are placed between the magnet 78 and the target wheel 72.

As shown in Figure 3, the sensor assembly 70 defines a central axis 84 with which the center of the magnet 78, the center of the coil 80, and the center of the magnetic piece 82 are aligned. The coil 80 and the magnet 48 are perpendicular with the central axis 84. Moreover, the magnetic piece 82 includes an upper surface 86 that is perpendicular to the central axis 84 and a lower surface 88 that is angled with respect to the central axis 84. As such, the magnetic piece 82 is tapered from one side to the other. As shown in Figure 3, the magnet 78 generates a magnetic field, indicated by arrow 90, that is parallel to the central axis.

As the target wheel 72 rotates, the teeth 74 move past the coil 80, as indicated by direction arrow 92, and alter the magnetic field 90 sensed by the coil 80. Accordingly, the configuration of the sensor assembly 70, i.e., the tapered shape of the magnetic piece 82, causes the coil 80 to output an asymmetric signal, described below.

Figure 4 shows a third alternative sensor assembly generally designated 100. As shown in Figure 4, the sensor assembly 100 includes a magnetic target wheel 102 that is alternatingly formed with plural teeth 104 and plural slots 106. A permanent magnet 108 is placed just beyond the outer periphery of the target wheel 102. A coil 110 of wire circumscribes the magnet 108. Figure 4 shows that the sensor assembly 10 also includes a magnetic piece 112 placed adjacent to the magnet 108 and the coil 110 opposite the target wheel 102.

As shown in Figure 4, the sensor assembly 40 defines a central axis 114 with which the center of the magnet 108, the center of the coil 110, and the center of the magnetic piece 112 are aligned. Moreover, the coil 110 and the magnetic piece 112 are oriented perpendicular to the central axis 114. Figure 4 shows that the magnet 108 includes an upper surface 116 that is perpendicular to the central axis 114 and a lower surface 118 that is angled with respect to the central axis 114. As such, the magnet 108 is tapered from one side to the other. As shown in Figure 3, the magnet 108 generates a magnetic field, indicated by arrow 120, that is parallel to the central axis 114.

As the target wheel 102 rotates, the teeth 104 move past the coil 110, as indicated by direction arrow 122, and alter the magnetic field 120 sensed by the coil 110. Accordingly, the configuration of the sensor assembly 100, i.e., the tapered shape of the magnet 108, causes the coil 110 to output an asymmetric signal, described below.

Figure 5 shows a fourth alternative sensor assembly generally designated 130. As shown in Figure 5, the sensor assembly 130 includes a magnetic target wheel 132 that is alternatingly formed with plural teeth 134 and plural slots 136. A permanent magnet 138 is placed just beyond the outer periphery of the target wheel 132. An asymmetrically shaped coil 140 of wire circumscribes a magnetic piece 142. The coil 140 and the magnetic piece 142 are placed between the magnet 138 and the target wheel 132.

As shown in Figure 5, the sensor assembly 130 defines a central axis 144 with which the center of the magnet 138, the center of the coil 140, and the center of the magnet piece 142 are aligned. Moreover, the magnet 138 and the magnetic piece 142 are oriented perpendicular to the central axis 144. The central axis 144, however, is not an axis of symmetry for the coil 140. Figure 5 shows that the magnet 138 generates a magnetic field, indicated by arrow 146, that is parallel to the central axis 144.

As the target wheel 132 rotates, the teeth 134 move past the coil 140, as indicated by direction arrow 148, and alter the magnetic field 146 sensed by the coil 140. Accordingly, the configuration of the sensor assembly 130, i.e., the asymmetric shape of the coil 140, causes the coil 140 to output an asymmetric signal, described below.

Referring now to Figure 6, a fifth alternative sensor assembly is shown and generally designated 160. As shown in Figure 6, the sensor assembly 160 includes a magnetic target wheel 162 that is alternatingly formed with plural teeth 164 and plural slots 166. A permanent magnet 168 is placed just beyond the outer periphery of the target wheel 162. A coil 170 of wire circumscribes a magnetic piece 172. The coil 170 and the magnetic piece 172 are placed between the magnet 168 and the target wheel 162.

As shown in Figure 6, the sensor assembly 40 defines a central axis 174 with which the center of the magnet 168 is aligned. Moreover, the magnet 168 is oriented perpendicular to the central axis 174. Figure 6 shows that the magnet 168 generates a magnetic field, indicated by arrow 176, that is parallel to the central axis 174. As shown, the coil 170, and the magnetic piece 172 are oriented at an angle 178 with the central axis 174.

As the target wheel 162 rotates, the teeth 164 move past the coil 170, as indicated by direction arrow 180, and alter the magnetic field 176 sensed by the coil 170. Accordingly, the configuration of the sensor assembly 160, i.e., the orientation of the coil 170 and the magnetic piece 172, causes the coil 170 to output an asymmetric signal, described below.

Referring now to Figure 7, a sixth alternative sensor assembly is shown and generally designated 190. As shown in Figure 7, the sensor assembly 190 includes a magnetic target wheel 192 that is alternatingly formed with plural teeth 194 and plural slots 196. A permanent magnet 198 is placed just beyond the outer periphery of the target wheel 192. A coil 200 of wire circumscribes a magnetic piece 202. The coil 200 and the magnetic piece 202 are placed between the magnet 198 and the target wheel 192.

As shown in Figure 7, the sensor assembly 190 defines a central axis 204 with which the center of the magnet 198, the center of the coil 200, and the center of the magnetic piece 202 are aligned. Moreover, the magnet 198, the coil 200, and the magnetic piece 202 are oriented perpendicular to the central axis 204. Figure 7 shows that the magnet 198 generates a magnetic field, indicated by arrow 206, that is oriented at an angle 208 with respect to the central axis 204.

As the target wheel 192 rotates, the teeth 194 move past the coil 200, as indicated by direction arrow 210, and alter the magnetic field 206 sensed by the coil 200. Accordingly, the configuration of the sensor assembly 190, i.e., the angle of magnetization 208 of the magnet 198, causes the coil 200 to output an asymmetric signal, described below.

Figure 8 shows yet a seventh alternative sensor assembly generally designated 220. As shown in Figure 8, the sensor assembly 40 includes a magnetic target wheel 222 that is alternatingly formed with plural teeth 224 and plural slots 226. A permanent magnet 228 is placed just beyond the outer periphery of the target wheel 222. A coil 230 of wire circumscribes a magnetic piece 232. The coil 230 and the magnetic piece 232 are placed between the magnet 228 and the target wheel 222.

As shown in Figure 8, the sensor assembly 220 defines a central axis 234 with which the center of the magnet 228, the center of the coil 230, and the center of the magnetic piece 232 are aligned. Moreover, the magnet 228, the coil 230, and the magnetic piece 232 are oriented perpendicular to the central axis 234. Figure 8 shows that the magnet 228 generates a relatively strong magnetic field to one side of the central axis 234, indicated by arrow 236, and a relatively weak magnetic field to the other side of the central axis 234, indicated by arrow 238. As shown, the magnet 228 is magnetized so that the magnetic fields 236, 238 are parallel to the central axis 234. It is to be appreciated that the differing magnetic fields 236, 238 may be produced, e.g., by an ad hoc magnetization process or by selectively demagnetizing a normally magnetized magnet. Such a partial demagnetization can be achieved, e.g., by local heating of the magnet material with a laser beam or other means.

As the target wheel 222 rotates, the teeth 224 move past the coil 230, as indicated by direction arrow 240, and alter the magnetic fields 236, 238 sensed by the coil 230. Accordingly, the configuration of the sensor assembly 220, i.e., the differing strengths of the magnetic fields 236, 238 produced by the magnet 228, causes the coil 230 to output an asymmetric signal, described below.

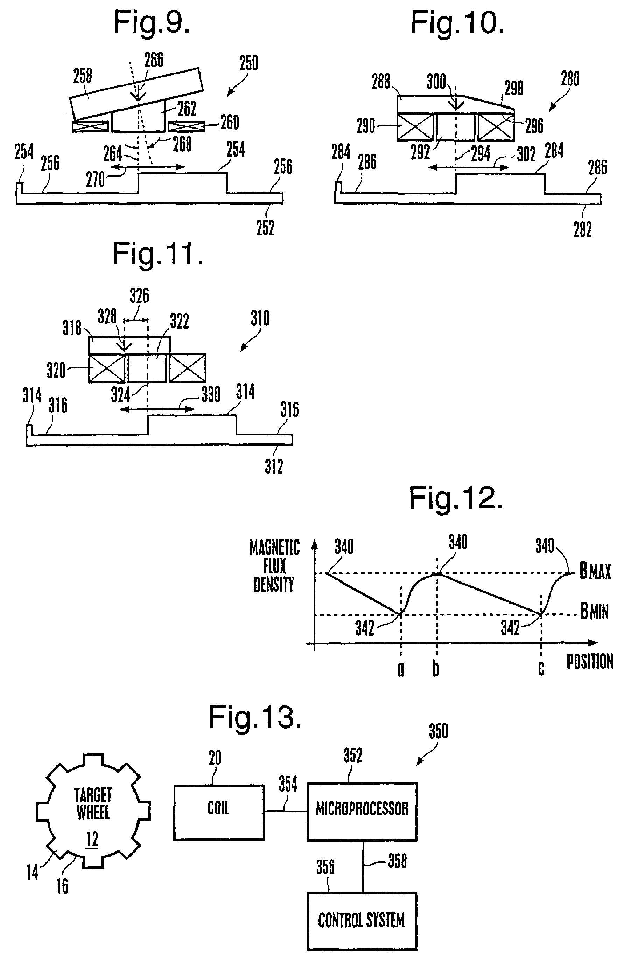

Figure 9 shows an alternative sensor assembly generally designated 250. As shown in Figure 9, the sensor assembly 250 includes a magnetic target wheel 252 that is alternatingly formed with plural teeth 254 and plural slots 256. A permanent magnet 258 is placed just beyond the outer periphery of the target wheel 252. A coil 260 of wire circumscribes a magnetic piece 262. The coil 260 and the magnetic piece 262 are placed between the magnet 258 and the target wheel 252.

As shown in Figure 9, the sensor assembly 250 defines a central axis 264 with which the center of the magnet 258, the center of the coil 260, and the center of the magnetic piece 262 are aligned. As shown, the coil 260 and the bottom of the magnetic piece 262 are perpendicular to the central axis 264. Figure 9 shows that the magnet 258 generates a magnetic field, indicated by arrow 266, that is perpendicular to the length of the magnet 258. As shown, the magnet 258 is oriented at an angle 268 with the central axis 264.

As the target wheel 252 rotates, the teeth 254 move past the coil 260, as indicated by direction arrow 270, and alter the magnetic field 266 sensed by the coil 260. Accordingly, the configuration of the sensor assembly 250, i.e., the orientation of the magnet 48, causes the coil 260 to output an asymmetric signal, described below.

Figure 10 shows an alternative sensor assembly generally designated 280. As shown in Figure 10, the sensor assembly 280 includes a magnetic target wheel 282 that is alternatingly formed with plural teeth 284 and plural slots 286. A permanent magnet 288 is placed just beyond the outer periphery of the target wheel 282. A coil 290 of wire circumscribes a magnetic piece 292. The coil 290 and the magnetic piece 292 are placed between the magnet 288 and the target wheel 282.

As shown in Figure 10, the sensor assembly 280 defines a central axis 294 with which the center of the magnet 288, the center of the coil 290, and the center of the magnetic piece 292 are aligned. Figure 10 shows that the coil 290 and the magnetic piece 292 are oriented perpendicular to the central axis 294. As shown, the magnet 288 includes a bottom surface 296 that is perpendicular to the central axis 294 and an upper surface 298 that is partially angled with respect to the central axis 294. Thus, the magnet 288 is at least partially tapered. Figure 10 shows that the magnet 288 generates a magnetic field, indicated by arrow 300, that is parallel to the central axis 294.

As the target wheel 282 rotates, the teeth 284 move past the coil 290, as indicated by direction arrow 302, and alter the magnetic field 300 sensed by the coil 290. Accordingly, the configuration of the sensor assembly 280, i.e., the at least partially tapered shape of the magnet 288, causes the coil 290 to output an asymmetric signal, described below.

Figure 11 shows an alternative sensor assembly generally designated 310. As shown in Figure 11, the sensor assembly 310 includes a magnetic target wheel 312 that is alternatingly formed with plural teeth 314 and plural slots 316. A permanent magnet 318 is placed just beyond the outer periphery of the target wheel 312. A coil 320 of wire circumscribes a magnetic piece 322. The coil 320 and the magnetic piece 322 are placed between the magnet 318 and the target wheel 312.

As shown in Figure 11, the sensor assembly 310 defines a central axis 324 with which the center of the coil 320 and the center of the magnetic piece 322 are aligned. Figure 11 shows that the magnet 318 is offset from the central axis 324, i.e., the center of the magnet 318 is located a distance 326 from the central axis 324. As shown, the magnet 318, the coil 320, and the magnetic piece 322 are oriented perpendicular to the central axis 324. The magnet 318 generates a magnetic field, indicated by arrow 328, that is parallel to the central axis 324.

As the target wheel 312 rotates, the teeth 314 move past the coil 320, as indicated by direction arrow 330, and alter the magnetic field 328 sensed by the coil 320. Accordingly, the configuration of the sensor assembly 310, i.e., the offset placement of the magnet 318, causes the coil 320 to output an asymmetric signal, described below.

It can be appreciated that in the embodiments describe above, the magnetic piece 22, 52, 82, 112, 142, 172, 202, 232, 262, 292, 322 increases the magnetic field and the resulting output signal. In the embodiments shown in Figures 1 and 3, the shape of the magnetic piece 22, 82 causes the coil 20, 80 to output an asymmetric signal. However, in each of the remaining embodiments shown in Figures 2 and Figures 4 through 11, the magnetic piece 52, 112, 142, 172, 202, 232, 262, 292, 322 can be omitted from described structure while the coil 50, 110, 140, 170, 200, 230, 260, 290, 320 still outputs an asymmetric signal.

Figure 12 shows a graph, applicable to each sensor assembly described above, of the magnetic flux density present in the coil 20, 50, 80, 110, 140, 170, 200, 230, 260, 290, 320 versus the position of the target wheel 12, 42, 72, 102, 132, 162, 192, 222, 252, 282, 312. Figure 12 shows that the magnetic flux density asymmetrically cycles between a maximum value 340 and a minimum value 342 without crossing the zero axis. As shown, the slope of the graph leading to the maximum value 340 and the slope of the graph leading from the minimum value 342 are distinctly different. Since the output signal generated by the coil 20, 50, 80, 110, 140, 170, 200, 230, 260, 290, 320 is proportional to the derivative of the magnetic flux that the coil 20, 50, 80, 110, 140, 170, 200, 230, 260, 290, 320 encompasses, the configuration of sensor assembly 10, 40, 70, 100, 130, 160, 190, 220, 250, 280, 310 causes the coil 20, 50, 80, 110, 140, 170, 200, 230, 260, 290, 320 to produce an output signal that is asymmetric. This asymmetric signal can be used to not only determine the position of the target wheel 14, but also its direction of motion.

Referring now to Figure 13, a system in which the present invention can be incorporated is shown and generally designated 350. Figure 13 shows that the system includes a target wheel, e.g., the target wheel 12 shown in Figure 1 and described above, and a coil, e.g., the coil 20 shown in Figure 1 and described above. The coil 20 is connected to a microprocessor 352 via electric line 354. In turn, the microprocessor 352 is connected to a control system 356 by electric line 358. Accordingly, the microprocessor 352 receives an asymmetric signal from the coil 20 and determines the position of the target wheel 12 and its direction of motion based thereon. The microprocessor 352 then outputs a signal representing the position of the target wheel 12 and the direction of motion of the target wheel 12 to the control system 356.

With the configuration of structure described above, it is to be appreciated that the target wheel sensor assembly 10, 40, 70, 100, 130, 160, 190, 220, 250, 280, 310 can be used to determine the position and direction of motion of a rotating target wheel 12, 42, 72, 102, 132, 162, 192, 222, 252, 282, 312 using only a single magnet 18, 48, 78, 108, 138, 168, 198, 228, 258, 288, 318 and a single coil 20, 50, 80, 110, 140, 170, 200, 230, 260, 290, 320. It is also to be appreciated that several of the embodiments described above can be combined with other embodiments described above to yield a target wheel sensor assembly that outputs an asymmetric signal. For example, features of the embodiment shown in Figure 3 may be combined with features of the embodiment shown in Figure 5 to yield another target wheel sensor assembly.

While the particular TARGET WHEEL SENSOR ASSEMBLY as herein shown and described in detail is fully capable of attaining the above-described objects of the invention, it is to be understood that it is the presently preferred embodiment of the present invention and thus, is representative of the subject matter which is broadly contemplated by the present invention, that the scope of the present invention fully encompasses other embodiments which may become obvious to those skilled in the art, and that the scope of the present invention is accordingly to be limited by nothing other than the appended claims, in which reference to an element in the singular is not intended to mean "one and only one" unless explicitly so stated, but rather "one or more." All structural and functional equivalents to the elements of the above-described preferred embodiment that are known or later come to be known to those of ordinary skill in the art are expressly incorporated herein by reference and are intended to be encompassed by the present claims. Moreover, it is not necessary for a device or method to address each and every problem sought to be solved by the present invention, for it is to be encompassed by the present claims. Furthermore, no element, component, or method step in the present disclosure is intended to be dedicated to the public regardless of whether the element, component, or method step is explicitly recited in the claims. No claim element herein is to be construed under the provisions of 35 U.S.C. section 112, sixth paragraph, unless the element is expressly recited using the phrase "means for."

## Claims

1. A target wheel sensor assembly (10, 40, 70, 100, 130, 160, 190, 220, 250, 280, 310), comprising:
a target wheel (12, 42, 72, 102, 132, 162, 192, 222, 252, 282, 312);
a magnetic piece (22, 52, 82, 112, 142, 172, 202, 232, 262, 292, 322);
one and only one magnet (18, 48, 78, 108, 138, 168, 198, 228, 258, 288, 318); and
one and only one coil (20, 50, 80, 110, 140, 170, 200, 230, 260, 290, 320), at least one of the magnetic piece (22, 52, 82, 112, 142, 172, 202, 232, 262, 292, 322), the magnet (18, 48, 78, 108, 138, 168, 198, 228, 258, 288, 318), and the coil (20, 50, 80, 110, 140, 170, 200, 230, 260, 290, 320) being configured so that as the target wheel (12, 42, 72, 102, 132, 162, 192, 222, 252, 282, 312) rotates, it causes the coil (20, 50, 80, 110, 140, 170, 200, 230, 260, 290, 320) to output an asymmetric signal.

2. The sensor assembly (10, 100) of Claim 1, wherein the sensor assembly (10, 100) defines a central axis (28, 144), the magnet (18, 108) and the coil (20, 110) being oriented perpendicularly to the central axis (28, 144), and wherein the magnetic piece (22, 112) is configured so that as the target wheel (12, 102) rotates it causes the coil (20, 110) to output an asymmetric signal.

3. The sensor assembly (10) of Claim 2, wherein the magnet (18) defines a top, the magnetic piece (22) includes an upper portion (24) and a lateral portion (26) extending therefrom, and wherein the magnetic piece (22) is placed so that the upper portion (24) is adjacent to the top of the magnet (18) and the lateral portion (26) flanks one side of the coil (20).

4. The sensor assembly (100) of Claim 2, wherein the magnet (118) defines a top, the magnetic piece (112) being placed adjacent to the top of the magnet (118) and wherein the magnet (118) is tapered.

5. The sensor assembly (40) of Claim 1, wherein the sensor assembly (40) defines a central axis (54), the magnet (48) being placed proximal to the target wheel (42), the coil (50) circumscribing the magnetic piece (52), the coil (50) and magnetic piece (52) being placed between the magnet (48) and the target wheel (42), and wherein the magnet (48), the coil (50), and the magnetic piece (52) are oriented at an angle (58) with the central axis (54).

6. The sensor assembly (70, 250) of Claim 1, wherein the sensor assembly (70, 250) defines a central axis (84, 264), the magnet (78, 258) is placed proximal to the target wheel (72, 252), the coil (80, 260) circumscribes the magnetic piece (82, 262), the coil (80, 260) and magnetic piece (82, 262) are placed between the magnet (78, 258) and the target wheel (72, 252), and the magnetic piece (82, 262) is tapered.

7. The sensor assembly (70) of Claim 6, wherein the magnet (78) is oriented perpendicularly to the central axis (84) and the magnetic piece (82) defines a lower surface (88) oriented at an angle with the central axis (84).

8. The sensor assembly (250) of Claim 6, wherein the magnet (78) is oriented at an angle (268) with the central axis (84).

9. The sensor assembly (130) of Claim 1, wherein the magnet (138) is placed proximal to the target wheel (132), the coil (140) circumscribes the magnetic piece (142), the coil (140) and magnetic piece (142) being placed between the magnet (138) and the target wheel (132), and wherein the coil (140) is asymmetrically shaped.

10. The sensor assembly (160) of Claim 1, wherein the sensor assembly (160) defines a central axis (174), the magnet (168) is placed proximal to target wheel (162), the coil (170) circumscribes the magnetic piece (172), the coil (170) and the magnetic piece (162) being placed between the magnet (168) and the target wheel (162), the magnet (168) being oriented perpendicular to the central axis (174), and wherein the coil (170) and the magnetic piece (172) are oriented at an angle (178) with the central axis (174).

11. The sensor assembly (190) of Claim 1, wherein the sensor assembly (190) defines a central axis (204), the magnet (198) is placed proximal to the target wheel (192), the coil (200) circumscribes the magnetic piece (202), the coil (200) and magnetic piece (202) being placed between the magnet (198) and the target wheel (192), the magnet (198), the coil (200), and the magnetic piece (202) being oriented perpendicular to the central axis (204), and wherein the magnet (198) generates a magnetic field (206) that is oriented at an angle (208) with the central axis (204).

12. The sensor assembly (220) of Claim 1, wherein the sensor assembly (220) defines a central axis (234), the magnet (238) is placed proximal to the target wheel (222), the coil (230) circumscribes the magnetic piece (232), the coil (230) and the magnetic piece (232) being placed between the magnet (238) and the target wheel (222), and wherein the magnet (238) generates at least a first magnetic field (236) and at least a second magnetic field (238).

13. The sensor assembly (220) of Claim 12, wherein the first magnetic field (236) and the second magnetic field (238) have different field strengths.

14. The sensor assembly (280) of Claim 1, wherein the sensor assembly (280) defines a central axis (294), the magnet (288) is placed proximal to the target wheel (282), the coil (290) circumscribes the magnetic piece (292), the coil (290) and magnetic piece (292) being placed between the magnet (288) and the target wheel (282), the magnet (288), the coil (290), and the magnetic piece (292) being oriented perpendicular to the central axis (294), and wherein the magnet (288) is at least partially tapered.

15. The sensor assembly (310) of Claim 1, wherein the sensor assembly (310) defines a central axis (324), the magnet (318) is placed proximal to the target wheel (312), the coil (320) circumscribes the magnetic piece (322), the coil (320) and magnetic piece (322) being placed between the magnet (318) and the target wheel (312), the magnet (318), the coil (320), and the magnetic piece (322) being oriented perpendicular to the central axis (324), and wherein the magnet (318) defines a center that is located a distance (326) from the central axis (324).

16. A target wheel sensor assembly (10, 40, 70, 100, 130, 160, 190, 220, 250, 280, 310), comprising:
a target wheel (12, 42, 72, 102, 132, 162, 192, 222, 252, 282, 312);
a magnetic piece (22, 52, 82, 112, 142, 172, 202, 232, 262, 292, 322);
one and only one magnet (18, 48, 78, 108, 138, 168, 198, 228, 258, 288, 318); and
one and only one coil (20, 50, 80, 110, 140, 170, 200, 230, 260, 290, 320) placed in proximity to the target wheel (12, 42, 72, 102, 132, 162, 192, 222, 252, 282, 312), the coil (20, 50, 80, 110, 140, 170, 200, 230, 260, 290, 320) sensing a position of the target wheel (12, 42, 72, 102, 132, 162, 192, 222, 252, 282, 312) and a direction of motion of the target wheel (12, 42, 72, 102, 132, 162, 192, 222, 252, 282, 312) as the target wheel (12, 42, 72, 102, 132, 162, 192, 222, 252, 282, 312) rotates.

17. The sensor assembly (10, 100) of Claim 16, wherein the sensor assembly (10, 100) defines a central axis (28, 144), the magnet (18, 108) and the coil (20, 110) being oriented perpendicularly to the central axis (28, 144), and wherein the magnetic piece (22, 112) is configured so that as the target wheel (12, 102) rotates it causes the coil (20, 110) to output an asymmetric signal.

18. The sensor assembly (40) of Claim 16, wherein the sensor assembly (40) defines a central axis (54), the magnet (48) being placed proximal to the target wheel (42), the coil (50) circumscribing the magnetic piece (52), the coil (50) and magnetic piece (52) being placed between the magnet (48) and the target wheel (42), and wherein the magnet (48), the coil (50), and the magnetic piece (52) are oriented at an angle (58) with the central axis (54).

19. The sensor assembly (70, 250) of Claim 16, wherein the sensor assembly (70, 250) defines a central axis (84, 264), the magnet (78, 258) being placed proximal to the target wheel (72, 252), the coil (80, 260) circumscribes the magnetic piece (82, 262), the coil (80, 260) and magnetic piece (82, 262) being placed between the magnet (78, 258) and the target wheel (72, 252), and wherein the magnetic piece (82, 262) is tapered.

20. The sensor assembly (130) of Claim 16, wherein the magnet (138) is placed proximal to the target wheel (132), the coil (140) circumscribes the magnetic piece (142), the coil (140) and magnetic piece (142) being placed between the magnet (138) and the target wheel (132), and wherein the coil (140) is asymmetrically shaped.

21. The sensor assembly (160) of Claim 16, wherein the sensor assembly (160) defines a central axis (174), the magnet (168) being placed proximal to target wheel (162), the coil (170) circumscribes the magnetic piece (172), the coil (170) and the magnetic piece (162) being placed between the magnet (168) and the target wheel (162), the magnet (168) being oriented perpendicular to the central axis (174), and wherein the coil (170) and the magnetic piece (172) are oriented at an angle (178) with the central axis (174).

22. The sensor assembly (190) of Claim 16, wherein the sensor assembly (190) defines a central axis (204), the magnet (198) being placed proximal to the target wheel (192), the coil (200) circumscribes the magnetic piece (202), the coil (200) and magnetic piece (202) being placed between the magnet (198) and the target wheel (192), the magnet (198), the coil (200), and the magnetic piece (202) being oriented perpendicular to the central axis (204), and wherein the magnet (198) generates a magnetic field (206) that is oriented at an angle (208) with the central axis (204).

23. The sensor assembly (220) of Claim 16, wherein the sensor assembly (220) defines a central axis (234), the magnet (238) being placed proximal to the target wheel (222), the coil (230) circumscribes the magnetic piece (232), the coil (230) and the magnetic piece (232) being placed between the magnet (238) and the target wheel (222), and wherein the magnet (238) generates at least a first magnetic field (236) and at least a second magnetic field (238).

24. The sensor assembly (280) of Claim 16, wherein the sensor assembly (280) defines a central axis (294), the magnet (288) is placed proximal to the target wheel (282), the coil (290) circumscribes the magnetic piece (292), the coil (290) and magnetic piece (292) being placed between the magnet (288) and the target wheel (282), the magnet (288), the coil (290), and the magnetic piece (292) being oriented perpendicular to the central axis (294), and wherein the magnet (288) is at least partially tapered.

25. The sensor assembly (310) of Claim 16, wherein the sensor assembly (310) defines a central axis (324), the magnet (318) being placed proximal to the target wheel (312), the coil (320) circumscribes the magnetic piece (322), the coil (320) and magnetic piece (322) being placed between the magnet (318) and the target wheel (312), the magnet (318), the coil (320), and the magnetic piece (322) being oriented perpendicular to the central axis (324), and wherein the magnet (318) defines a center that is located a distance (326) from the central axis (324).

26. A target wheel sensor assembly (10, 40, 70, 100, 130, 160, 190, 220, 250, 280, 310), comprising:
a target wheel (12, 42, 72, 102, 132, 162, 192, 222, 252, 282, 312);
one and only one magnet (18, 48, 78, 108, 138, 168, 198, 228, 258, 288, 318); and
one and only one coil (20, 50, 80, 110, 140, 170, 200, 230, 260, 290, 320) placed in proximity to the target wheel (12, 42, 72, 102, 132, 162, 192, 222, 252, 282, 312), the coil (20, 50, 80, 110, 140, 170, 200, 230, 260, 290, 320) sensing a position of the target wheel (12, 42, 72, 102, 132, 162, 192, 222, 252, 282, 312) and a direction of motion of the target wheel (12, 42, 72, 102, 132, 162, 192, 222, 252, 282, 312) as the target wheel (12, 42, 72, 102, 132, 162, 192, 222, 252, 282, 312) rotates.
